# EUROPEAN PATENT APPLICATION

(11) **EP 0 933 753 A2**
(43) Date of publication of application: **04.08.1999**
(21) Application number: 99300632.9
(22) Date of filing: 28.01.1999
(51) Int. Cl.: G09G 3/20, G06F 3/147

(54) **Integrated circuit video tile**

(30) Priority: 30.01.1998 US 16560
(71) Applicant: Hewlett-Packard Company, Palo Alto, California 94304 (US)
(72) Inventor: Goel, Atul, Fort Collins,CO 80524 (US); Martin, Robert P., Fort Collins,CO (US)
(74) Representative: Colgan, Stephen James

(57) **Abstract**

Video tiles (100, 406-442) are manufactured as integrated circuits, each including a digital signal processor (308) and a graphic driver (310) internal to the integrated circuit, and one or more display elements (104) mounted on a top surface (108) of the integrated circuit. The video tiles may be assembled on a printed circuit board (402) to produce a video display device (400). When connected by way of a video bus (502), the video tiles are self-configuring, each displaying an appropriate portion of an image retrieved from the video bus. The video tiles allow large video screens to be assembled from small components having a much higher production yield than conventional one-piece flat screen displays.

## Description

### Field of the Invention

This invention pertains to the display of video information, and more specifically, to the display of either analog or digital video information by way of an integrated circuit video tile which can be replicated to form a tiled video display device.

### Background of the Invention

In recent years, there has been a strong push to develop increasingly larger flat-panel displays. While technology advancements have allowed manufacturers to move from black & white to color displays, and from light-emitting diode (LED) to thin-film transistor (TFT) displays, the size of these displays has grown relatively slowly. For example, over the past five years, flat-panel display diagonals have only grown from approximately 9-14", with the larger displays often suffering from inoperative pixels (i.e., a low yield). The problem with manufacturing flat-panel displays of larger size is that it is difficult to achieve a high yield across a display incorporating millions of active elements.

It is therefore a primary object of this invention to provide methods and apparatus for achieving a high yield in displays of any size.

Another object of this invention is to provide a display technology which allows screens of any size to be assembled from duplicate modular elements.

An additional object of this invention is to provide an integrated circuit video tile which is self-configuring.

It is a further object of this invention to provide a means for producing displays which need not be flat.

It is yet another object of this invention to provide a display technology which reduces environmental waste.

### Summary of the Invention

In the achievement of the foregoing objects, the inventor has devised an integrated circuit video tile which can be replicated to form a tiled video display device. The integrated circuit video tiles (i.e., video tiles) of the video display device are preferably connected in serpentine fashion by way of a video bus, and are self-configuring so that each video tile is capable of determining what portion of an image it is to display. Each video tile has one or more display elements for displaying one or many pixels of an image.

Such a tiled video display device is advantageous over prior "flat-panel displays" in that each tile can be manufactured in a reasonably small size (e.g., 1" x 1") such that a high production yield is achieved. The problem of manufacturing large displays with millions of working elements (i.e., no inoperative pixels) is therefore solved. Instead, small integrated circuits having as few as one or as many as a small plurality of working pixel elements can be: manufactured, assembled in an array, and used to produce a display of any size. For example, it is envisioned that relatively small video tiles could be assembled to form a billboard having trillions of active elements, yet not even a single inoperative pixel!

Video tiles can be manufactured cost-effectively, and without significant tooling costs, due to well-established and proven infrastructure which is already in existence for the fabrication of integrated circuits (specifically, application specific integrated circuits (ASICs)). Furthermore, it is possible to assemble any size of screen from only one size of video tile .

Yet another advantage of utilizing a tiled video display device is that the "flat panel" limitation of current technologies no longer exists. If tiles are manufactured such that their size is sufficiently small with respect to the size of a complete display, then the tiles can be connected to form a screen which gives the illusion of being curved.

Video tiles also reduce environmental waste. Given that the yield of "perfect" larger screens is small (typically on the order of 20%), video tiles reduce environmental waste by reducing the quantity of screen material that is rejected during the manufacturing process.

These and other important advantages and objectives of the present invention will be further explained in, or will become apparent from, the accompanying description, drawings and claims.

### Brief Description of the Drawings

An illustrative and presently preferred embodiment of the invention is illustrated in the drawings, in which:
FIG. 1 is a top perspective view of an integrated circuit video tile;
FIG. 2 is a bottom perspective view of the FIG. 1 integrated circuit video tile;
FIG. 3 is a top perspective view of the FIG. 1 integrated circuit video tile, wherein an upper portion of the video tile has been removed to show internal components of the video tile;
FIG. 4 is a top perspective view of a tiled video display device comprising a plurality of the FIG. 1 integrated circuit video tiles assembled in an array; and
FIG. 5 is a schematic illustrating a preferred video bus for connecting the integrated circuit video tiles of the FIG. 4 video display device.

### Description of the Preferred Embodiment

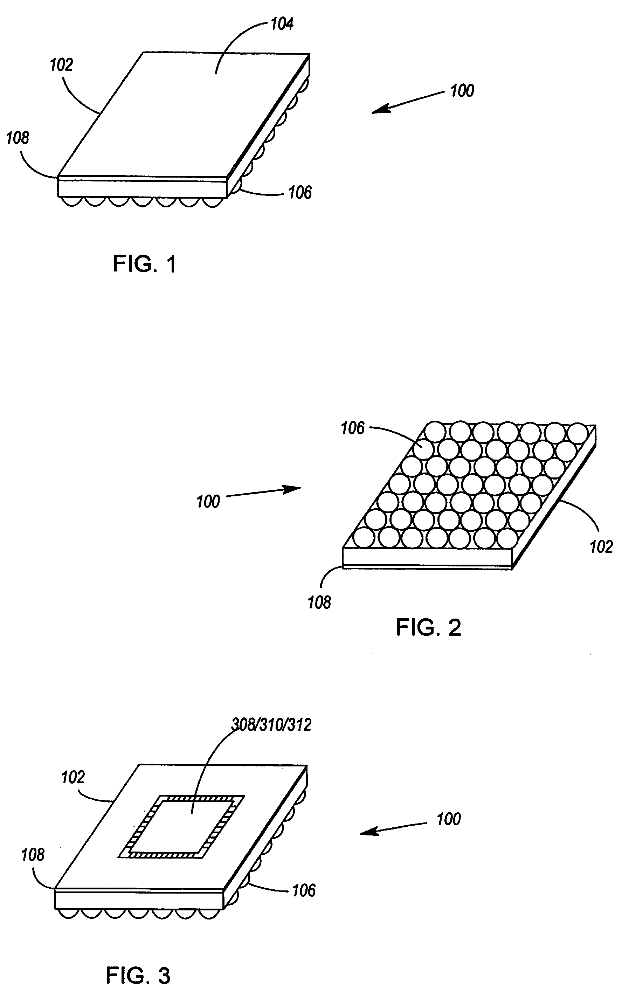

A singular integrated circuit video tile 100 is pictured in FIGS. 1-3, and may generally comprise an integrated circuit package 102, a digital signal processor 308, a graphic driver 310, and one or more display elements 104. The integrated circuit package has a top portion 108 to which the display elements 104 are mounted. The digital signal processor 308 and graphic driver 310 are mounted interior to the integrated circuit package 102, with the graphic driver 310 being electrically coupled to both the digital signal processor 308 and the one or more display elements 104.

As used in this disclosure, the terms "coupled" or "electrically coupled" mean a connection between two or more elements via wires and/or other elements. Thus, a statement that element A is coupled to element B encompasses both a direct connection between elements A and B, and a connection between elements A and B via other elements (e.g., through a resistor, bus interface, etc.).

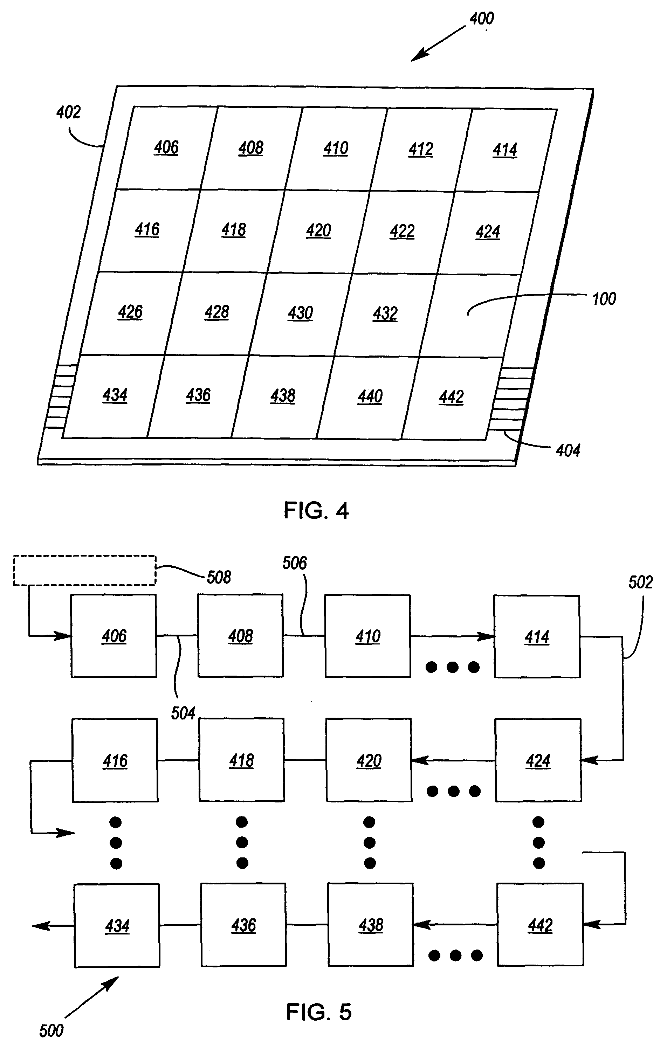

A tiled video display device 400 is pictured in FIG. 4, and may generally comprise a printed circuit board 402 having a plurality of integrated circuit video tiles 100, 406-442 thereon. The plurality of integrated circuit video tiles 100, 406-442 are arranged edge to edge in an array which is electrically coupled to the printed circuit board 402. Each of the integrated circuit video tiles 100, 406-442 may be constructed as shown in FIGS. 1-3.

A method of displaying video information on one or more of the video tiles 100 illustrated in FIG. 1, or on the tiled video display device 400 of FIG. 4, may generally commence with the step of arranging a plurality of integrated circuit video tiles 100, 406-442 so that they form a serially connected array of integrated circuit video tiles 100, 406-442. A plurality of video data packets may then be passed between the plurality of integrated circuit video tiles 100, 406-442, wherein for each video data packet passed, a first integrated circuit video tile 406 retrieves a first portion of display information from the video data packet, a second integrated circuit video tile 408 retrieves a second portion of display information from the video data packet, and so on until each portion of display information in the video data packet has been retrieved. After the portions of display information are retrieved, the portions of display information are displayed by the integrated circuit video tiles 100, 406-442.

Having described an integrated circuit video tile 100, a tiled video display device 400, and a method of displaying video information in general, the above-described apparatus, and method of using same, will now be described in further detail.

The video tile 100 of FIG. 1 may be manufactured as an application specific integrated circuit (ASIC). The core elements of the ASIC are a digital signal processor (DSP) 308 and a graphic driver 310.

The integrated circuit package 102 may comprise a ball grid array (BGA) 106 for surface mount technology (SMT) assembly on its bottom surface, and one or more display elements 104 on its top surface 108.

The one or more display elements 104 may form a light emitting diode (LED) display, a thin-film transistor (TFT) display, a liquid crystal display (LCD), a micro-mirror display, a plasma display, or any other form of display which emits or reflects monochromatic or color light, and which may be adhered to (or constructed as part of) an integrated circuit package 102. The one or more display elements 104 preferably cover the top surface 108 of the integrated circuit package 102 from edge to edge, but need not, as it is possible to arrange a number of video tiles 100 such that light "spill over" fills in any space left between the elements 104.

The one or more display elements 104 of each video tile 100 display one or more pixels of an image. For example, a video tile 100 might comprise 1) a single display element for displaying a single pixel of an image, 2) a plurality of display elements which together display a pixel of an image (e.g., red, green and blue LEDs), or a plurality of display elements for displaying a plurality of pixels of an image. In the latter case, each video tile 100 would have a vertical and/or horizontal resolution.

Each video tile 100 may further comprise a static or refreshed dynamic memory 312 for storing data to be displayed by its display elements 104. The DSP 308 then retrieves video data from a bus to which the video tile 100 is connected, and causes the data to be stored in the memory 312. The graphic driver 310 then retrieves data from memory 312 for subsequent display by the display elements 104. The memory can be internal (e.g., a cache) or external (e.g., VRAM) to the DSP 308. The memory 312 may also be double buffered so that image updates do not exhibit visible "tearing".

A number of video tiles may be attached to a printed circuit board (PCB) to form a tiled video display device 400 (i.e., a display screen). See FIG. 4. The display screen may be flat, curved, stepped, etc. Although it is preferred that each video tile be abutted to adjacent tiles, small seams between tiles may once again be filled by light spill over. The resolution of such a display would be the resolution of a single video tile 100 multiplied by the total number of video tiles 100, 406-442 forming the tiled video display device 400.

It is envisioned that a display screen of any size might be fabricated from modular video tiles. For very large screens, such as wall-to-wall screens or billboards, a screen could be constructed from a combination of both printed circuit board tiles 402 and video tiles 100.

An array of video tiles 400 may be powered and/or interconnected by traces 404 in a printed circuit board 402. Power, timing and data signals may be applied to these traces in a printed circuit board 402 by either local or distant signal means. An example of a distant signal means might be a television receiver/transmitter. Signals may also be applied to printed circuit board traces 404 via a hard connection (e.g., wires, or a bus) or other means (e.g., an infrared or UHF communication system).

One means of interconnecting a number of video tiles 100, 406-442 is by way of a video bus 502 (FIG. 5). In such an arrangement, each video tile 408 is associated with an incoming video bus portion 504 and an outgoing video bus portion 506. A serpentine bus configuration is preferred, but other arrangements are acceptable. When a video data packet comprising image information is transmitted by way of the video bus 502, each video tile in turn extracts the portion of video information it requires for displaying its portion of an image, and ignores the rest.

Given a surface resolution of 2000 x 1000 (in pixels) refreshed at 60Hz, and assuming that three bytes of data are required to generate a single pixel in such a display, a bandwidth of somewhat less than 400Mbytes/second is needed. With 50MHz clocking, a video bus 502 such as that described above would need to be 8 bytes (64 bits) wide. With 25MHz clocking, the video bus 502 would need to be 16 bytes (128 bits) wide. Since each video tile 100, 406-442 would preferably need to be provided with external contacts for both incoming and outgoing video bus portions, the number of video contacts which each video tile needs to have in these examples is 128 and 256, respectively. Given current integrated circuit packaging technology, this is well within acceptable pin-out limitations.

A simple protocol on the video bus 502 can provide for self-configuration of the video tiles 100, 406-442 upon the application of power to the tiled video display device 400. The protocol need only provide a means for the tiles to count each other and divide an image amongst themselves.

In a preferred embodiment, the protocol comprises transmission of first and second information packets via the video bus 502. The first information packet transmitted via the video bus 502 is a "horizontal and vertical resolution information packet". This information packet is passed to all video tiles 100, 406-442 without modification, and provides a means for uploading the horizontal and vertical resolutions of a tiled video display device to each video tile 100, 406-442 forming a part of the tiled video display device 400.

The second information packet transmitted via the video bus 502 is an "X and Y video tile coordinate packet". While this packet is also passed to each video tile 100, 406-442, it is modified as it is passed. Upon receipt by a first video tile 406, the packet will contain the physical X and Y location of this first video tile 406 (i.e., the first video tile's location within the video display device 400). Typically, the location of the first video tile 406 will be (0,0). When the packet is passed to a second video tile 408, the X and Y coordinates of the packet are updated to reflect the location of this second video tile 408 (e.g., (1,0)). This process continues until each video tile 100, 406-442 has determined its X and Y coordinates, and knows which portion of an image it will ultimately display. Updates to the packet's X and Y coordinates may be made by either the sending or the receiving tile. The X and Y video tile coordinate packet will also contain information which the video tiles 100, 406-442 can use to determine the physical path of their connection via the video bus. This information is needed so that video tiles 100, 406-442 can determine how to update the X and Y coordinate values of the packet.

Additional or alternative information packets can also be passed between the video tiles 100, 406-442 by way of the video bus 502. For example, an end of frame information packet can be passed to indicate when double buffered video tiles are to switch buffers.

Due to the relatively small size of video tiles 100, 406-442, the video bus 502 preferably transmits digital data only. However, a video display device 400 could be adapted to receive both analog (e.g., television signals) and digital (e.g., a computer video graphic) signals by providing it with an optional video converter chip 508. The video converter chip 508 would receive analog and/or digital signals, and then convert the signals to a digital format which can be transmitted on the video bus 502 in conformance with an accepted protocol. The video converter chip 508 might also be configured to send initialization packets to the video tiles 100, 406-442.

While illustrative and presently preferred embodiments of the invention have been described in detail herein, it is to be understood that the inventive concepts may be otherwise variously embodied and employed, and that the appended claims are intended to be construed to include such variations, except as limited by the prior art.

## Claims

1. An integrated circuit video tile (100), comprising:
a) an integrated circuit package (102);
b) a digital signal processor (308) mounted interior to the integrated circuit package;
c) one or more display elements (104) covering substantially all of a top portion (108) of the integrated circuit package; and
d) a graphic driver (310), electrically coupled to both the digital signal processor and the one or more display elements, and mounted interior to the integrated circuit package.

2. An integrated circuit video tile (100) as in claim 1, wherein the integrated circuit package (102) is a surface-mount package.

3. An integrated circuit video tile (100) as in claim 1, wherein the one or more display elements (104) completely cover the top portion (108) of the integrated circuit package (102).

4. A tiled video display device (400), comprising:
a) a printed circuit board (402) comprising a video bus (502); and
b) a plurality of integrated circuit video tiles (100, 406-442) which are electrically coupled to the printed circuit board, and electrically coupled to one another by way of the video bus.

5. A tiled video display device (400) as in claim 4, wherein each of the plurality of integrated circuit video tiles (100, 406-442) comprises one or more display elements (104) for displaying an image.

6. A tiled video display device (400) as in claim 4, wherein:
a) each of the plurality of integrated circuit video tiles (100, 406-442) comprises one or more display elements (104); and
b) the plurality of integrated circuit video tiles are electrically coupled to the printed circuit board (402) in a manner which enables the display elements to form a three-dimensional display surface.

7. A tiled video display device (400) as in claim 4, wherein a protocol used on the video bus (502) allows the plurality of integrated circuit video tiles (100, 406-442) to self-configure when powered on, such that an image transmitted by way of the video bus is appropriately divided among the plurality of integrated circuit video tiles.

8. A method of displaying video information, comprising the steps of:
a) arranging a plurality of integrated circuit video tiles (100, 406-442) so as to form a serially connected array (500) of integrated circuit video tiles;
b) passing a plurality of video data packets between the plurality of integrated circuit video tiles, wherein for each video data packet passed, a first integrated circuit video tile retrieves a first portion of an image from the video data packet, a second integrated circuit video tile retrieves a second portion of an image from the video data packet, and so on until each image portion has been retrieved from the video data packet; and
c) displaying an image on one or more display elements of the plurality of integrated circuit video tiles.

9. A method as in claim 8, further comprising the step of passing a horizontal and vertical resolution information packet between the plurality of integrated circuit video tiles (100, 406-442) so that horizontal and vertical resolutions of the array (500) of integrated circuit video tiles may be downloaded by each of the plurality of integrated circuit video tiles.

10. A method as in claim 8, further comprising the steps of:
a) passing an X and Y video tile coordinate packet between the plurality of integrated circuit video tiles (100, 406-442); and
b) incrementing X and Y coordinates of the X and Y video tile coordinate packet as it is passed, in response to horizontal and vertical resolutions of the array (500), so that each of the plurality of integrated circuit video tiles may determine its horizontal and vertical location with the plurality of integrated circuit video tiles.
